(19) Europäisches Patentamt
European Patent Office
Office européen des brevets

(11) **EP 4 228 328 A1**

(12) **EUROPEAN PATENT APPLICATION**

(43) Date of publication:
**16.08.2023 Bulletin 2023/33**

(21) Application number: **22156589.8**

(22) Date of filing: **14.02.2022**

(51) International Patent Classification (IPC):
**H04W 48/12** $^{(2009.01)}$

(52) Cooperative Patent Classification (CPC):
**H04W 48/12; H04W 56/0045;** H04B 7/18504;
H04B 7/18513

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Panasonic Intellectual Property
Corporation
of America
Torrance, CA 90504 (US)**

(72) Inventors:
• **KLENNER, Peter**
  **63225 Langen (DE)**
• **NISHIO, Akihiko**
  **Osaka, 571-8501 (JP)**
• **SUZUKI, Hidetoshi**
  **Osaka, 571-8501 (JP)**

(74) Representative: **Grünecker Patent- und
Rechtsanwälte
PartG mbB
Leopoldstraße 4
80802 München (DE)**

(54) **NON-TERRESTRIAL NETWORK EPOCH TIME INDICATION CONSIDERING SFN CYCLE**

(57) The present disclosure relates to a network node and a user device, as well as to methods for execution on a network node, a user device or on integrated circuitry. For example, the user device or its circuitry may be configured for determining, from the system information, an indication of a count of system frame cycles and assistance information indication, for determining epoch time for deriving assistance information based on the indication of the count of system frame cycles, and for deriving the assistance information based on the epoch time and the assistance information indication.

Fig. 15

**Description**

**1. Technical Field**

The present invention relates to transmission of system information relating to a non-terrestrial network. In particular, the present invention relates to apparatuses and methods that generate, signal, receive, and/or utilize the system information relating to a non-terrestrial network.

**2. Description of the Related Art**

Currently, the 3rd Generation Partnership Project (3GPP) works on the technical specifications for the next generation cellular technology, which is also called fifth generation (5G).

One objective is to provide a single technical framework addressing all usage scenarios, requirements and deployment scenarios (see e.g. section 6 of 3GGP TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

One notable feature of 5G is the introduction of non-terrestrial networks (NTN) including a satellite in the communication path between a user device and a network.

SUMMARY

One non-limiting and exemplary embodiment facilitates efficient transmission and reception of system information relating to a non-terrestrial network.

In an embodiment, the techniques disclosed herein feature a user device comprising: a transceiver which, in operation, receives system information regarding a non-terrestrial network from a network node; and processing circuitry which, in operation (i) determines, from the system information, an indication of a count of system frame cycles and assistance information indication, (ii) determines epoch time for deriving assistance information based on the indication of the count of system frame cycles, and (iii) derives the assistance information based on the epoch time and the assistance information indication.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE FIGURES

In the following exemplary embodiments are described in more detail with reference to the attached figures and drawings.

**Fig. 1**     shows an exemplary architecture for a 3GPP NR system.

**Fig. 2**     is a schematic drawing that shows a functional split between NG-RAN and 5GC.

**Fig. 3**     is a sequence diagram for RRC connection setup/reconfiguration procedures.

**Fig. 4**     is a schematic drawing showing usage scenarios of Enhanced mobile broadband (eMBB), Massive Machine Type Communications (mMTC) and Ultra Reliable and Low Latency Communications (URLLC).

**Fig. 5**     is a block diagram showing an exemplary 5G system architecture for a non-roaming scenario.

**Fig. 6**     illustrates an exemplary NG RAN architecture based on a transparent satellite.

**Fig. 7**     illustrates an exemplary NG RAN architecture based on a regenerative satellite.

**Fig. 8**     illustrates an exemplary scenario where several UEs are served by a satellite.

**Fig. 9**     illustrates an exemplary NTN setup with a satellite moving at a certain velocity.

**Fig. 10**    illustrates an exemplary variation of the common timing advance.

**Fig. 11**    illustrates an exemplary SFN cycle as supported by the NR.

**Fig. 12**    is a schematic drawing that illustrates epoch time value and SFN value depending on time.

**Fig. 13**    is a schematic drawing illustrating the epoch time value and SFN value depending on time in relation to the system information updating and repetitions.

**Fig. 14**    is a block diagram showing an exemplary structure of a user device and a network node.

**Fig. 15**    is a schematic drawing illustrating a first exemplary implementation in which the system frame number count is explicitly indicated in the system information.

**Fig. 16**    is a schematic drawing illustrating a second exemplary implementation in which the system frame number count is indicated by way of a hyper frame number.

**Fig. 17**    is a flow diagram illustrating the first exemplary implementation on a network side.

**Fig. 18**    is a flow diagram illustrating the first exemplary implementation on a user device side.

**Fig. 19**    is a flow diagram illustrating the second exemplary implementation on a network side.

**Fig. 20**    is a flow diagram illustrating the second exemplary implementation on a user device side.

**Fig. 21**    is a schematic drawing illustrating a third exemplary implementation in which the system frame number count is indicated by way of a validity duration.

**Fig. 22**    is a flow diagram illustrating the third exemplary implementation on a network side.

**Fig. 23**    is a flow diagram illustrating the third exemplary implementation on a user device side.

DETAILED DESCRIPTION

*5G NR system architecture and protocol stacks*

3GPP has been working on the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

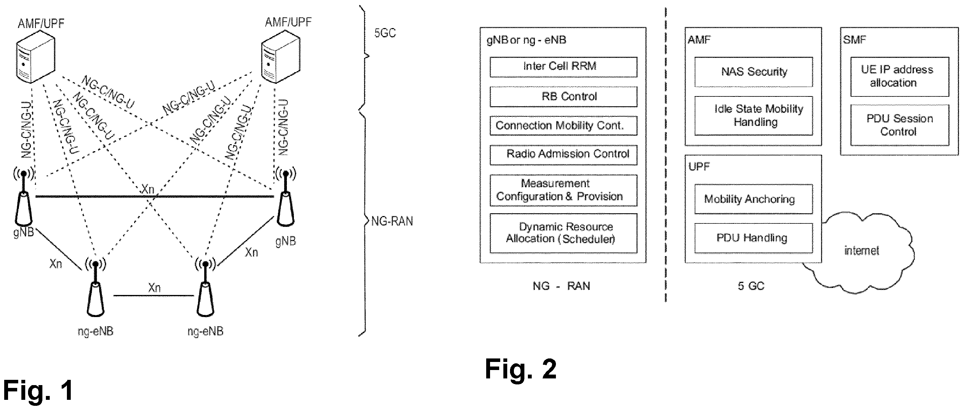

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.3.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/$km^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;

- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

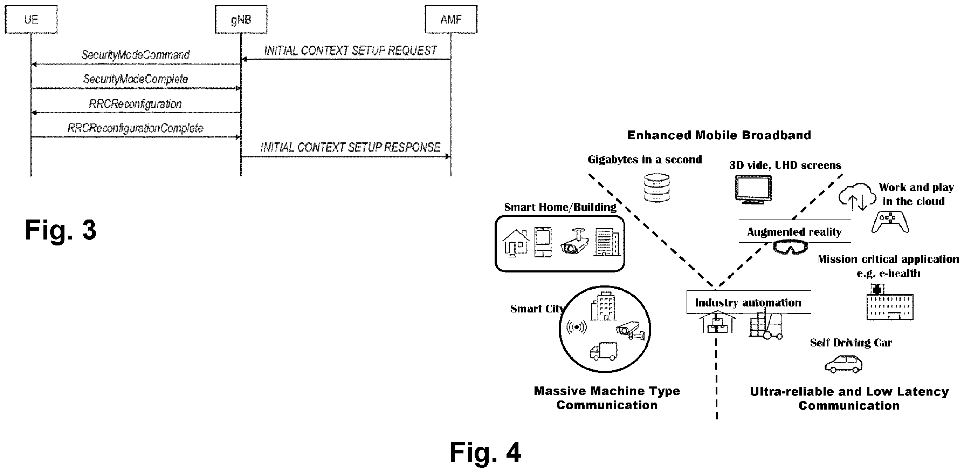

**Fig. 3** illustrates some interactions between a UE, gNB, and AMF (a 5GC entity) in the context of a transition of the UE from RRC_IDLE to RRC_CONNECTED for the NAS part (see TS 38.300).
RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST.

Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNB, and a transmitter which, in operation, transmits an initial context setup message, via the NG connection, to the gNB to cause a signaling radio bearer setup between the gNB and a user equipment (UE). In particular, the gNB transmits a Radio Resource Control, RRC, signaling containing a resource allocation configuration information element (IE) to the UE via the signaling radio bearer. The UE then performs an uplink transmission or a downlink reception based on the resource allocation configuration.

*Usage Scenarios of IMT for 2020 and beyond*

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^6$ level), higher availability, packet sizes of up to 256 bytes, time synchronization down to the order of a few $\mu$s where the value can be one or a few $\mu$s depending on frequency

range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

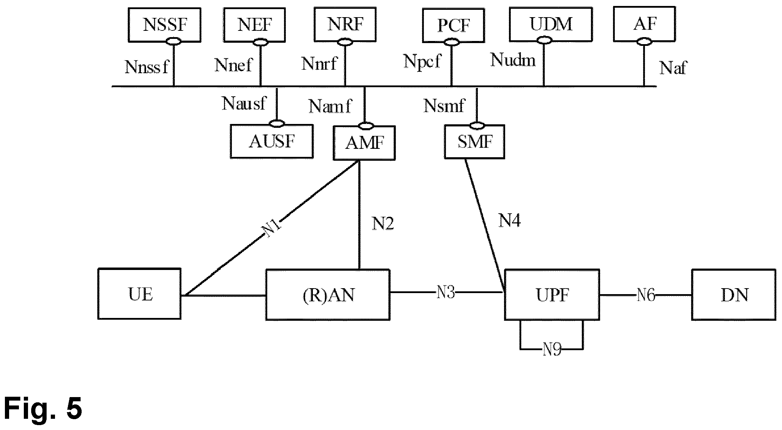

Fig. 5 illustrates a 5G NR non-roaming reference architecture (see TS 23.501 v16.6.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNB and a UE in accordance with the QoS requirement and control circuitry, which, in operation, performs the services using the established PDU session.

*System information transmission*

System information is downlink broadcast information transmitted periodically by a base station (gNB in 5G, in general a network node). It includes information for a UE to establish connection with the base station. In 5G, UE reads system information for cell camping when it is powered on, for cell selection and re-selection when it is in RRC_IDLE mode. System information provides all necessary details such as system frame number, system bandwidth, PLMN, cell selection and re-selection thresholds etc. to access the network.

System information is structured in a Master Information Block (MIB) and System Information Blocks (SIBs). SIBs accommodate various information. For the present disclosure of relevance may be information related to NTN transmission as will be described below. The MIB information is transmitted (broadcasted) via BCH and PBCH channels while SIBs are transmitted via DL-SCH and PDSCH channels.

In general, system information may be transmitted periodically (so that the newly connecting terminals may obtain it) or on demand. The periodic schedule of system information transmission is configurable by RRC. In particular, a SIB1 (which is referred to by MIB) carries scheduling information which specifies e.g. the system information window (repetition period of the system information transmission pattern), some transmission parameters (e.g. physical layer parameters) to receive the system information, and the mapping (transmission pattern) of the SIBs within the system information window.

*Non-Terrestrial Networks, NTN*

Thanks to the wide service coverage capabilities and reduced vulnerability of space/airborne vehicles to physical attacks and natural disasters, NTNs may foster the rollout of NR service in unserved areas that cannot be covered by terrestrial NR networks (for instance isolated or remote areas, on board aircraft or vessels) and unserved (for instance suburban and rural areas). Further, NTNs may reinforce NR service reliability by providing service continuity for passengers on moving platforms or ensuring service availability anywhere, especially for critical communication.

The benefits relate to either non-terrestrial networks operating alone or to integrated terrestrial and non-terrestrial networks, which may impact coverage, user bandwidth, system capacity, service reliability or availability.

A non-terrestrial network refers to a network, or segment of networks using RF resources on board of a satellite, for instance. NTNs typically feature the following system elements: an NTN terminal, which may refer to a 3GPP UE or a terminal specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the gateway and space/airborne platform.

In 3GPP, NR-based operation in a non-terrestrial network (NTN) is studied and described (see e.g. 3GPP TR 38.811, Study on New Radio (NR) to support non-terrestrial networks, version 15.4.0, and 3GPP TR 38.821, Solutions for NR to support non-terrestrial networks, version 16.0.0).

A non-terrestrial network (NTN) refers to a network, or segment of a network, using RF resources on board of an airborne or spaceborne entity for transmission, such as e.g.:

- Spaceborne vehicles: Satellites (including Low Earth Orbiting (LEO) satellites, Medium Earth Orbiting (MEO) satellites, Geostationary Earth Orbiting (GEO) satellites as well as Highly Elliptical Orbiting (HEO) satellites)

- Airborne vehicles: High Altitude Platforms (HAPs) encompassing Unmanned Aircraft Systems (UAS) including Lighter than Air UAS (LTA), Heavier than Air UAS (HTA), all operating in altitudes typically between 8 and 50 km, quasi-stationary.

Exemplary, a UAS or satellite platform is connected to the 5G network through one or several gateways linked to the data network. NTNs may comprise the following system elements: an NTN-capable terminal, which may refer to a 3GPP UE or a terminal that is specific to the satellite system in case a satellite does not serve directly 3GPP UEs; a service link which refers to the radio link between the user equipment and the space/airborne platform; an airborne platform embarking a payload; gateways that connect the space/airborne platform to the core network; feeder links which refer to the radio links between the Gateway Center space/airborne platform. The platform can implement either transparent or regenerative payload transmissions, with the following exemplary characteristics.

- In the transparent payload, the platform acts as a repeater by filtering, converting, and amplifying the wave signal, while the payload is unchanged.

- In the regenerative payload, the platform has some or all of the base station functionalities. It may perform demodulation/modulation, switching/routing, coding/decoding in addition to radio frequency filtering, conversion and amplification.

- The Inter-satellite links (ISL) can optionally be used to form a constellation of satellites. ISL (Inter-Satellite Links) is a transport link between satellites.

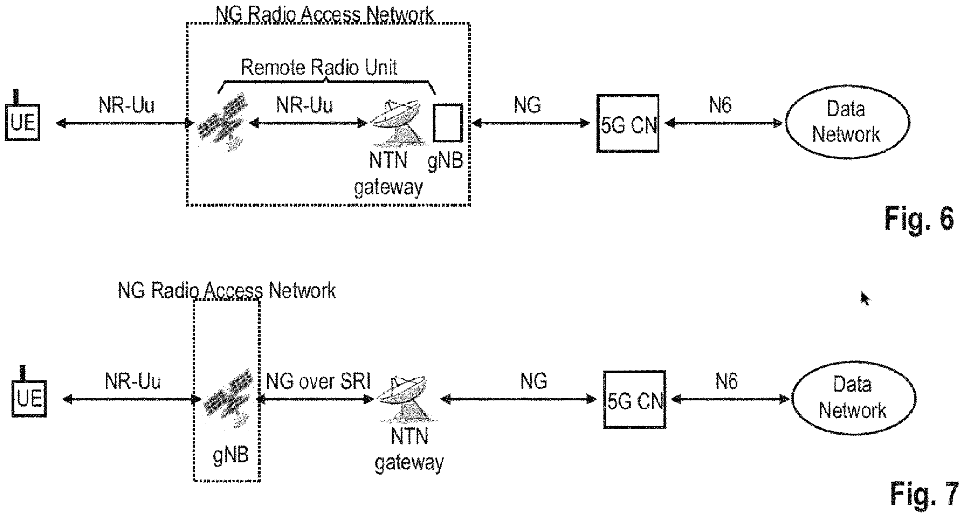

**Fig. 6** illustrates a scenario of a non-terrestrial network, wherein a transmission between a terminal (UE) is performed via a remote radio unit including a satellite and an NTN gateway. A gNB is located at the gateway as a scheduling device. The satellite payload implements frequency conversion and radiofrequency amplifier in both uplink and downlink direction. Hence, the satellite repeats the NR radio interface from the feeder link (between the NTN gateway and the satellite) to the service link (between the satellite and the UE) and vice versa. The Satellite Radio Interface (SRI) on the feeder link is the NR-Uu. In other words, the satellite does not terminate NR-Uu. A satellite in this configuration is referred to as a transparent satellite.

**Fig. 7** illustrates a scenario of a non-terrestrial network, wherein a transmission between a terminal (UE) is performed via a satellite including a gNB as a scheduling device. A satellite in this configuration is referred to as a regenerative satellite. According to one exemplary implementation (see TR 38.321 section 5.2), the NG-RAN logical architecture as described in TS 38.401 is used as baseline for NTN scenarios. The satellite payload implements regeneration of the signals received from Earth. The NR-Uu radio interface is on the service link between the UE and the satellite. The Satellite Radio Interface (SRI) is on the feeder link between the NTN gateway and the satellite. SRI (Satellite Radio Interface) is a transport link between the NTN GWand satellite.

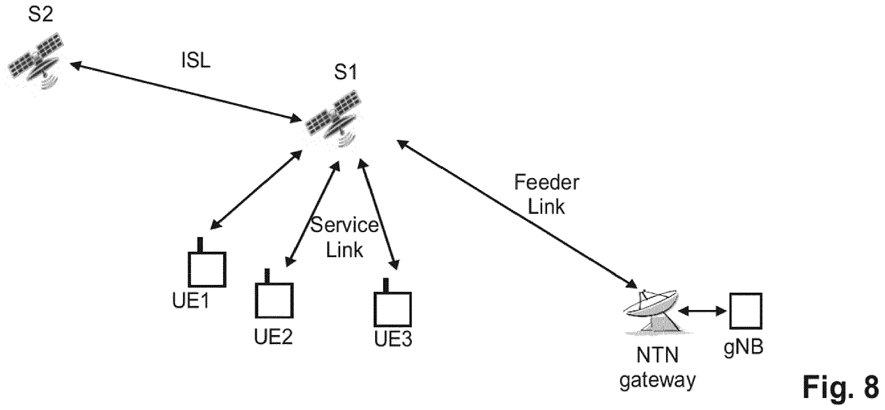

**Fig. 8** illustrates an exemplary scenario where three UEs (UE1, UE2, UE3) are served by a satellite S1. The satellite S1 is communicating via a feeder link with a gNB and NTN gateway as well as via an inter-satellite link (ISL) with another neighbor satellite S2.

There are different types of satellites that provide communications, Low-Earth Orbit (LEO) or Geosynchronous Equatorial Orbit (GEO) (also called geo-stationary) satellites. Geostationary satellites appear fixed as they move at the same angular velocity as the Earth and orbit along a path parallel to Earth's rotation, thereby providing coverage to a specific area. From the ground, GEO satellites appear to be stationary. LEO satellites revolve at an altitude between 160 to 2,000 kilometers (99 to 1,200 miles). A constellation of LEO satellites can provide continuous, global coverage as the satellite moves. Unlike GEO satellites, LEO satellites also fly at a much faster pace because of their proximity to Earth.

There are many applications for GEO satellites, including weather forecasting, satellite radio, and television. Because GEO satellites orbit at such a high altitude, however, there is a longer communication time lag (latency) as the signals travel to and from these satellites. For this reason, many critical communications are handled over LEO satellite networks, which allow for faster connectivity without wires or cables.

However, in general, in the NTN, there may be various different kinds of platforms, including not only satellites but also UAS (Unmanned Aerial System) platforms, examples of which are listed in Table 1 (corresponding Table 4.1-1 of 3GPP TR 38.821, see also 3GPP TR 38.821, Section 4.1, Non-Terrestrial Networks overview):

*Table 1: Types of NTN platforms*

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including High Altitude Platform Station (HAPS)) | 8 - 50 km (20 km for HAPS) | | 5 - 200 km |
| High Elliptical Orbit (HEO) satellite | 400 - 50000 km | Elliptical around the earth | 200 - 3500 km |

For LEO, MEO, and HEO satellites, which do not keep a their position fixed with respect to a given earth point, a satellite beam, which corresponds to a cell or PCI (Physical Cell ID) or to an SSB (Synchronization Signal Block) beam of the NR wireless system may be moving over the earth.

An NTN scenario that provides cells which are continuously moving on the Earth (e.g. a LEO, MEO, or HEO based NTN), is referred to as an earth moving cell scenario. The continuous cell motion on the Earth is due to the operation where the satellite beam is fixed with respect to the NTN platform. Therefore, the footprint of the cell, which may correspond to several satellite beams or one satellite beam, slides on the earth surface with the motion of the NTN platform (e.g. a LEO satellite).

Information about the orbital trajectories of satellites are contained in ephemeris data (or "satellite ephemeris data"). There are different possible representations of ephemeris data, wherein one possibility is to use orbital parameters such as semi-major axis, eccentricity, inclination, right ascension of the ascending node, argument of periapsis, mean anomaly at a reference point in time, and the epoch. The first five parameters can determine an orbital plane (orbital plane parameters), and the other two parameters are used to determine exact satellite location at a time (satellite level parameters). Orbital plane parameters and satellite level parameters are exemplified in Section 7.3.6.1, Representation of Complete Ephemeris Data, of 3GPP TR 38.821 V16.0.0). Another possible option is to provide coordinates of the satellite location (x,y,z), a velocity vector (vx,vy,vz) and a reference point in time.

*Table 2: Elements of Ephemeris*

| Orbital plane parameters | $\sqrt{a}$ | Square root of semi major axis a (semi-major axis) |
|---|---|---|
| | e | Eccentricity (eccentricity) |
| | $i_0$ | Inclination angle at reference time (inclination) |
| | $\Omega_0$ | Longitude of ascending node of orbit plane (right ascension of the ascending node) |
| | $\omega$ | Argument of perigee (argument of periapsis) |
| Satellite level parameters | Mo | Mean anomaly at reference time (true anomaly and a reference point in time) |
| | $t_{0e}$ | Ephemeris reference time (the epoch) |

In an NTN system, several satellites may share a common orbital plane. In such cases, some ephemeris data may be provided for orbital planes rather than for single satellites, to reduce the amount of data. The ephemeris data per orbital plane may be stored in the UE or in the UE's Subscriber Identity Module (SIM). However, for networks with many satellites, the size of ephemeris data can be rather large. Accordingly, rather than storing the ephemeris data, the ephemeris data may at least partially (or even fully) be transmitted from a gNB.

For instance, satellite level orbital parameters for all satellites that may serve a UE may be stored in the UE or in the SIM, and the ephemeris data for each satellite is linked to a satellite ID or index. The satellite ID or index of the serving satellite may then be broadcast in system information so that the UE can find the corresponding ephemeris data in the UE's SIM or storage. Alternatively, satellite level orbital parameters of the serving satellite may be broadcast in system information and UE will derive the position coordinates of the serving satellite. The ephemeris data of the neighboring satellites can also be provided to UE via system information or dedicated RRC signaling. In case the baseline orbital plane parameters are provisioned in the UE or SIM, it may be sufficient to broadcast the mean anomaly at a reference point in time and the epoch need to be broadcast to UE, so that overhead can be reduced.

*Timing advance and epoch time in NTN*

In 3GPP, a Release 17 work item for the support of Non-Terrestrial Networks (NTN) is still ongoing (see, e.g. 3GPP RP-201256, "WID: Solutions for NR to support non-terrestrial networks (NTN)"). NTN scenarios are characterized by long propagation delays, and UEs should account for them in the **timing advance** when transmitting on the uplink. Timing advance (TA) is a delay used to control the uplink transmission timing of an individual UE. It helps to ensure that uplink transmissions from all UE are synchronized when received by the base station (network node). Already in terrestrial systems, timing advance to be applied at a UE is transmitted from the network node to the particular UE.

The NTN transmission chain is split into two segments: between gateway and satellite (the feeder link), and between satellite and UE (the service link). The delay on the feeder link is referred to as "common delay" because it is the same for any UEs (see, e.g. UE1, UE2, and UE3 of Fig. 8) served by the same NTN entity (e.g. satellite S1). The delay on the feeder link is referred to as "UE-specific delay" as it may vary for the different UEs due to their possibly different locations.

To avoid revealing the physical position of the network node (gNB) to UEs, 3GPP RAN1 decided to signal the feeder link delay as a common timing advance value (see, Section 6.3.4 of 3GPP TR 38.821, v. 1.1.0) especially in architectures as shown in Fig. 6.

Autonomous acquisition of the service link TA at a UE is possible with UE known location and satellite ephemeris. UE own location is typically available to a UE, especially if it can be assumed that a UE has an access to a positioning system, e.g. Global Navigation Satellite System (GNSS) such as a global positioning system (GPS) or the like. Ephemeris data can be made available to the UE as mentioned in some examples above (stored in a SIM and/or obtained from system information signaling or the like).

However, in general, the present disclosure is not limited to fully autonomous determination of service link TA component. Rather, also the acquisition of the service link TA component may be assisted by signaling of a UE specific information to a particular UE. The common TA, which refers to the common component of propagation delay shared by all UEs within the coverage of same satellite beam/cell, may be broadcasted by the network per satellite beam/cell. The calculation of this common TA is conducted by the network with assumption on at least a single reference point per satellite beam/cell.

In other words, in an exemplary scenario, UEs compute the UE-specific delay autonomously since they are assumed to be GNSS-capable. UEs compute the feeder-link delay based on the polynomial for the common TA. The sum of these delays provide the UE with the applicable timing advance value for UL transmissions.

However, it was found that the feeder-link delay may be time-variant, in particular for fast-moving LEO satellites. A single value representing the common TA Imay thus lead to large approximation errors or require very frequent SIB updates resulting. In order to reflect the time variance, the common TA may be represented (approximated), e.g. as a polynomial.

For the 5G-NTN, ways of signaling TA have been discussed in RAN1 (Radio Access Network Working Group 1 of the 3GPP). For example, common TA may be approximated by a polynomial over a certain interval (referred to herein as validity interval) and the coefficients of the polynomial may be transmitted from a network node to one or more UE. It may be possible to transmit the coefficient by broadcasting, as they are common to the UEs served by the same NTN entity (e.g. satellite). UEs then compute the feeder link delay based on the polynomial defined by the received coefficients for the common TA.

3GPP TS 38.211 version h.0.0 (Release 17) titled "Physical channels and modulation" indicates in Section 4.3.1 how the timing advance is to be derived. Moreover, according to one of the agreements captured in R1-2111127 "FL Summary on enhancements on UL time and frequency synchronization for NR NTN", from RAN1#107-e meeting, using indicated Higher-layer Common TA parameters, if configured, the UE can determine the one-way propagation time ($Delay_{common}$) used for $N_{TA,\ common}$ calculation as follows:

$$Delay_{common}(t) = D_{Common}(t_{epoch}) + DCommonDrift \times (t - t_{epoch}) + DCommonDriftVariation \times (t - t_{epoch})^2$$

Where: •

$$D_{Common} = \frac{TACommon}{2}, DCommonDrift = \frac{TACommonDrift}{2} \text{ and } DCommonDriftVariation = \frac{TACommonDriftVariation}{2}$$

TACommon, TACommonDrift and TACommonDriftVariation are Common TA parameter defined in RAN1 Meeting #106-bis-e. $Delay_{common}(t)$ is the distance between the satellite and the uplink time synchronization reference point divided by the speed of light. DL and UL are frame aligned at the reference point with an offset given by $N_{TA,offset}$. $N_{TA,common}$ is derived by the UE based on $Delay_{common}(t)$ to pre-compensate the two-way transmission delay between the uplink time reference point and the satellite.

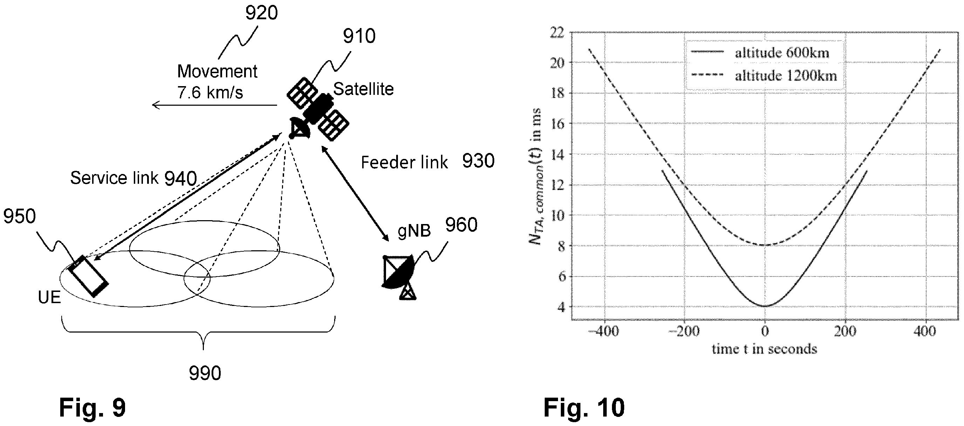

As a particular scenario example, in Rel.17 NTN, UE transmission timing is adjusted based on the propagation delay. This is illustrated in **Fig. 9.** A satellite 910 moves (illustrated by the movement arrow 920), e.g. with a velocity of 7.6 km/s. It provides a plurality (here 3) cells 990.

Service link 940 delay (between a UE 950 and a satellite 910) is calculated using satellite ephemeris (i.e. information on satellite location) and UE GNSS location information. Satellite ephemeris is broadcasted via system information, and, in particular, via a system information block (SIB) carrying NTN information, sometimes referred to as NTN-SIB. The system information is broadcasted by the satellite 910. The present disclosure is not limited to any particular network configuration. In some communication systems that may still profit from the present disclosure, the satellite may be controlled to broadcast the system information by the gNB 960.

Feeder link 930 delay (between the satellite 910 and a gNB 960) may be compensated by the network (e.g. by the gNB) or may be compensated by the UE 950 based on common TA parameters broadcasted via the NTN-SIB. The common TA parameters include information on feeder link delay and its variation e.g. due to LEO satellite (or other kind of satellite) movement.

**Fig. 10** shows an exemplary common timing advance value $N_{TA,common}(t)$ for two satellite altitudes (600km, 1200km). This common timing advance is illustrated for a constellation with a gateway (gNB, network node), a satellite, and a single UE in an initial position. At time t=0, the satellite is directly above the gateway. The satellite is visible from the UE under an elevation angle of 10° at t=0. The common timing advance value $N_{TA,common}(t)$ may be determined based on the signaled common TA parameters including the feeder link delay and variation rates (1st and 2nd order derivatives) of the delay.

The common timing advance parameters and further NTN related parameters are carried by the system information, e.g. in a specific NTN-SIB. The parameters carried therein may include one or more (or all) of the following:

- Ephemeris;
- Common TA parameters;

- Validity duration for UL sync information;
- t-Service (the timing information on when the serving cell is going to stop serving the area);
- Cell reference location;
- Epoch time;
- K_mac;
- Cell-specific Koffset;
- Indication for network enabled/disabled TA report
- Polarization indcation.

As mentioned above, the ephemeris may include satellite orbital parameters such as an anomaly (e.g. mean anomaly M at epoch time in radians); eccentricity; inclination; longitude (of ascending node); periapsis; and semi major axis. The ephemeris may include coordinates of satellite position state vector and coordinates of satellite velocity state vector.

Common TA parameters include e.g. parameters TACommon, TACommonDrifr, TACommonDriftVariant, and TACommonDriftVariation. In particular, TACommon is a network-controlled common timing advanced value and it may include any timing offset considered necessary by the network. TACommon with value of 0 is supported. The granularity of TACommon is $4.07 \times 10^{-3}$ μs. TACommonDrift indicates drift rate of the common TA. The granularity of TACommonDrift is $0.2 \times 10^{-3}$ μs/s. taCommonDriftVariant indicates drift rate variation of the common TA. The granularity of TACommonDriftVariant is $0.2 \times 10^{-4}$ μs/s^2. Values are given in unit of corresponding granularity.

t-Service indicates the time information on when a cell provided via NTN quasi-Earth fixed system is going to stop serving the area it is currently covering. Cell reference location is a reference location of a cell provided via NTN quasi-Earth fixed system.

Epoch time indicates the epoch time for the assistance information (i.e. Serving satellite ephemeris and Common TA parameters). When explicitly provided through SIB, or through dedicated signaling, epoch time is the starting time of a DL sub-frame, indicated by an SFN and a sub-frame number signaled together with the assistance information. The reference point for epoch time of the serving satellite ephemeris and Common TA parameters is the uplink time synchronization reference point.

K_mac is a scheduling offset provided by network if downlink and uplink frame timing are not aligned at gNB. It may be needed for UE action and assumption on downlink configuration indicated by a MAC-CE command in a PDSCH. When UE is not provided by network with a K_mac value, UE assumes K_mac = 0. For the reference subcarrier spacing value for the unit of K_mac in FR1 (Frequeny Range 1 that lies between 410 MHz - 7125 MHz.), a value of 15 kHz is used. The unit of K_mac is number of slots for a given subcarrier spacing.

The CellSpecific_K_offset is a scheduling offset used for the timing relationships that need to be modified for NTN. The unit of K_offset is number of slots for a given subcarrier spacing of 15 kHz.

ntnPolarizationDL may be optionally included within the NTN-SIB (sometimes also referred to as SIB NTN, SIB-NTN, or the like). If present, this parameter indicates polarization information for downlink transmission on service link: including Right hand, Left hand circular polarizations (RHCP, LHCP) and Linear polarization. Correspondingly, ntnPolarizationUL, if present, indicates polarization information for uplink service link. If not present and ntnPolarizationDL is present, UE assumes a same polarization for UL and DL.

As mentioned above, the epoch time is the reference time of the ephemeris and common TA parameters (assistance information). In other words, ephemeris and common TA parameters are generated based on the epoch time. The UE 950 calculates satellite 910 location and feeder link 930 delay based on the time indicated as epoch time and determined satellite location based on ephemeris. In NTN, epoch time is usually determined in terms of on SFN (system frame number) and subframe number in case it is signaled in the NTN-SIB. In other contexts, such as the Unix operating system, epoch time is the number of seconds that have elapsed since 00:00:00 UTC on 1 January 1970 (also called the Unix epoch). It is a continuous time without a wrap-around.

Epoch time $t_{epoch}$ appears in the approximation of the one-way propagation delay:

$$Delay_{common}(t) = D_{Common}(t_{epoch}) + DCommonDrift \times (t - t_{epoch}) + DCommonDriftVariation \times (t - t_{epoch})^2$$

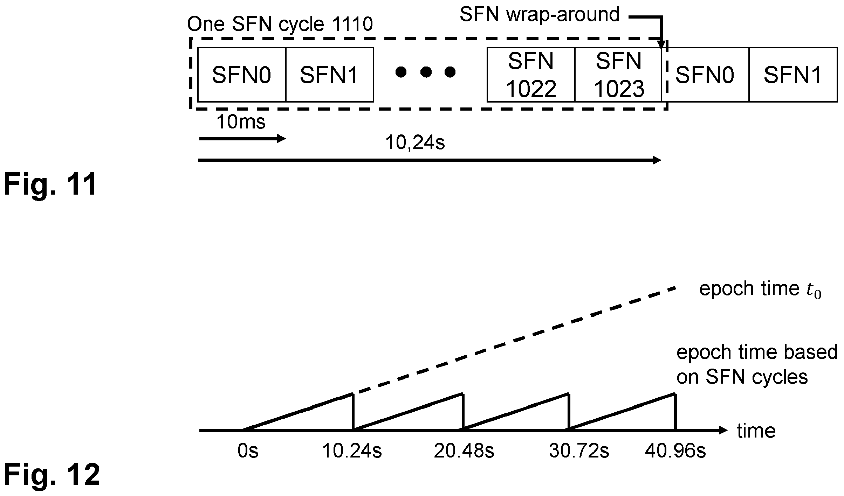

$D_{Common}$, *DCommonDrift* and *DCommonDriftVariation* are polynomial coefficients. However, it is noted that this is only an example of an approximation. In general, the present disclosure can work for any kind of approximation which makes use of a reference time (epoch time) to provide for timing advance variations. NR has a 10-bit System Frame Number (SFN) counting from 0 up to 1023 as shown in **Fig. 11.** The Master Information Block (MIB) carries the six most significant bits. The remaining four least significant bits are provided in the PBCH transport block as part of the channel coding. Beyond 1023 SFN wraps around and starts from 0. Thus, one SFN cycle 1110 comprises 1024 system frames. In NR (similarly to UMTS and LTE), the system frame (SF) has a duration of 10 ms and includes 10 subframes which are further divided into slots. However, the present disclosure is not limited to such configuration or to the current NR.

It is noted that the epoch time does not have to be signaled explicitly in the NTN-SIB and may be determined implicitly, e.g. according to the system information window.

As for the usual system information content (SIBs used for the terrestrial networks), there is a validity period (duration) for assistance information including ephemeris and common TA parameters, during which the estimated values (i.e. satellite location and feeder link delay) have a sufficient accuracy. The validity period is indicated as validity duration (VD), for instance within the NTN-SIB. It denotes validity duration for the entire content of the NTN-SIB. The validity may be longer than the SFN cycle 1110. For example, for LEO, the maximum validity duration is currently envisaged to be 240s (or even infinite for GEO).

As the epoch time is indicated by the SFN and the subframe number, and the SFN is cycled in every 1024 frames (i.e. every 10.24s), ambiguity occurs when assistance information is repeated in different SFN cycles. This is illustrated in **Fig. 12** shows a solid line representing the value of SFN over time. As can be seen, each SFN cycle (1024 SFNs), the SFN value falls back to zero. A dashed line illustrates a value (relative to a starting point, here denoted as 0 s) of the epoch time over time. As can be seen, the epoch time grows and does not wrap-up.

In order to avoid the ambiguity, the network would need to update the NTN-SIB contents (i.e. ephemeris, common TA parameters and epoch time) at least in every SFN cycle (every 10.24s), although the validity duration could be longer and still sufficient. This would lead to an unnecessary network complexity and lower efficiency, as well as to unnecessary UE complexity resulting in higher power consumption.

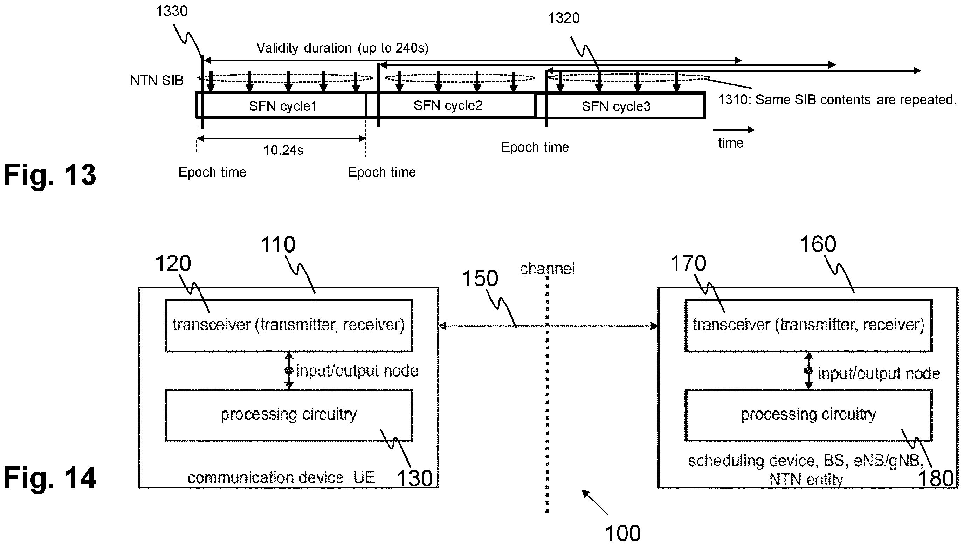

A more detailed illustration of time domain relation between the NTN-SIB transmission and SFN cycle is presented in **Fig. 13.** In particular, three SFN cycles are shown. An NTN-SIB is updated 1330 after each duration of the SFN cycle (it could also be less). Here, the term "updating" refers to updating the content of the NTN-SIB. It may be indicated for instance in scheduling information that schedules the SIBs that the content of the NTN-SIB has been updated, similarly to the current NR mechanism in which such indication is provided by SIB1 and considered by the UEs when deciding when and which SIBs to read. However, in general, such mechanism is not necessary for NTN-SIB. In particular, the UEs may recognize the need for reading NTN-SIB based on a validity duration indicated in the NTN-SIB or configured within SIB1. Moreover, NTN-SIB is transmitted 1320 also during the SFN cycles (indicated by the vertical arrows down in the figure). These transmissions 1310 repeat the most recently updated NTN-SIB. The dashed ellipses 1310 indicate NTN-SIBs with the same content. Same SIB content can be repeated only for time period less than SFN cycle length (10.24s). Otherwise, ambiguity of epoch time would occur. The content of the updated NTN-SIB is associated with a validity duration which starts at the update 1330 and has a value indicated in the updated NTN-SIB.

*Embodiments*

In order to avoid such increase of complexity on the network side as well as on the UE side, according to an embodiment, the network indicates an information to identify an SFN cycle of the epoch time in the NTN-SIB. This enables distinguishing the SFNs with the same value but belonging to different SFN cycles.

In the following, UEs, base stations, and procedures to meet these needs will be described for the new radio access technology envisioned for the 5G mobile communication systems, but which may also be used in LTE mobile communication systems or other communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood as merely examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user device** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The term **Non-terrestrial network, NTN, entity** can be broadly understood as an entity of the non-terrestrial network, such as spaceborne vehicles or airborne vehicles, as introduced in the above section relating to NTN. In the following, satellites will be assumed only as an example for such an NTN entity, while it should remain clear that also the other examples of NTN entities are covered.

For the following embodiments it is exemplarily assumed that data transmission takes place between the UE, via an NTN entity (e.g. satellite), and a network node. The term **network node** refers to a base station (e.g. gNB) as in Fig. 6 or to another entity with interface to core network (CN), such as the NTN gateway shown in Fig. 7. The scenario already introduced above of Fig. 8 and 9 can be referred to exemplarily in the following. For sake of simplifying the explanation, it is exemplarily assumed that the gateway and gNB (forming the network node) are collocated, thus avoiding a possible physical and logical separation of the gateway and the gNB (base station) in the subsequent explanations. Consequently, in the following, the embodiments will be described as occurring between the UE, the NTN entity, and the gNB, without specifically mentioning that a gateway is located between the NTN entity and the gNB or integrated in the gNB.

**Fig. 14** illustrates a general, simplified and exemplary block diagram of a user equipment 110 (also termed communication device) and a scheduling device 160 (here exemplarily assumed to be located in the base station, e.g. the eLTE eNB (alternatively termed ng-eNB) or the gNB in 5G NR). The UE 110 and eNB/gNB 160 are communicating with each other over a (wireless) physical channel respectively using the transceiver. The communication is illustrated by an arrow 150. Furthermore, the NTN entity can have the same or similar structure as the scheduling device, e.g. including a transceiver and processing circuitry. Accordingly, the UE 110 and the gNB 160 are part of a communication system 100.

Both devices 110 and 160 may comprise a transceiver 120, 170 and processing circuitry 130, 180. The transceiver 120, 170 in turn may comprise and/or function as a receiver and a transmitter. The processing circuitry 130, 180 may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different implementations of an improved transmission procedure will be described in the following. In said connection, improved entities, such as improved UEs, improved NTN entities, and improved base stations are presented, which participate in the improved transmission procedure. Corresponding methods for the UE, NTN entity and BS behavior are provided as well.

According to an embodiment, a user device (such as a terminal 950) is provided. The user device comprises a transceiver (such as the transceiver 120 shown in Fig. 14) and circuitry (such as the processing circuitry 130 in Fig. 14). The transceiver, in operation, receives system information regarding a non-terrestrial network from a network node. The transceiver may perform the reception controlled by the circuitry. In other words, the circuitry may control (instruct) the transceiver, including instructing the receiver to receive system information. The network node here is for example the NTN device (such as satellite or an airborne vehicle). However, it is conceivable that another network device such as gNB may provide (transmit) the system information.

The circuitry, in operation, determines, from the system information, an indication of a count of system frame cycles and assistance information indication. It then determines epoch time for deriving assistance information based on the indication of the count of system frame cycles. Finally, it derives the assistance information based on the epoch time and the assistance information indication.

Correspondingly to the user device, a network node (e.g. NTN node 910 such as satellite or gNB 960) is provided. It may correspond to the NTN entity of 160 Fig. 14 and include a transceiver such as the transceiver 170 in Fig. 14 (and described above) and circuitry such as the processing circuitry 180 in Fig. 14. The circuitry, in operation, generates system information regarding a non-terrestrial network. In particular, the system information includes an indication of a count of system frame cycles and assistance information indication. The assistance information that is indicated by the assistance information indication is derivable based on epoch time and the assistance information indication and the epoch time is determined based on the indication of the count of system frame cycles.

For example, the circuitry determines the assistance information (e.g. based on its own position and based on some information received from the gNB). Then, it generates assistance information (such as common TA information and/or ephemeris or the like). In order to enable UEs to derive the assistance information, the circuitry generates the assistance information indication that refers to epoch time related to a reference epoch time associated with the assistance information indication (e.g. the association may be given in that the reference time for determining the epoch time is the reference epoch time of the updated NTN-SIB transmission/reception carrying the assistance information indication).

Furthermore, the transceiver of the network device, in operation, transmits said system information.

In some implementations, the count of system frame cycles increases within a predefined value range cyclically. In other words, the count of system frame cycles (SFN cycles) may take values from a predefined range. Such predefined value range may be, e.g. 0-3 or 0-7 or 0-15 or the like. It is not necessary that the value range includes number of values being power of two, but such value range may increase efficiency of binary signaling in some scenarios. It may be advantageous if the value range of the count of SFN cycles is determined such that the maximum value of the range multiplied by the length of the SFN cycle is equal to or larger than maximum validity duration of the system information (NTN-SIB). This enables to always avoid the above mentioned ambiguity. For example, if the duration of the SFN cycle is 10.24s as shown in Fig. 13, and the maximum validity duration is 240s, it may be advantageous to provide the maximum count of SFN cycles of at least 24 (corresponding to a 5 bit counter or, equivalently a value range of 0-23 or, equivalently, 1-24). The SFN cycles may then be counted starting with the minimum range value (such as 0 for the range 0-23 or 1 for the range 1-24) from some predefined time instance (such as the time point of transmitting / receiving the updated NTN-SIB) cyclically, e.g. sequentially by 0, 1, 2, 3, .., 22, 23, 0, 1, etc.

In other words, advantageously, the maximum count of system frame cycles is equal to or greater than validity period of the system information (counted in terms of number of system frame cycles).

For example, the count of system frame cycles starts when is the system information (the one carrying the assistance information, NTN-SIB) is updated, and increases with any system frame cycle following the system frame cycle in which the system information was updated.

The term "system information" mentioned in the embodiments herein refers particularly to system information that carries NTN related information and is thus also referred to as NTN-SIB. It is noted that, as mentioned above, the system information can include at least one of:

- Ephemeris;
- Timing advance parameters;
- Validity duration for uplink synchronization information;
- Cell reference location;
- Scheduling offset between uplink and downlink; and
- Polarization indication for uplink and/or downlink.

These NTN-SIB contents are only exemplary. They are readily usable for the current NR system. However, the present disclosure is not limited to them. Moreover, there may be further parameters transmitted in the NTN-SIB.

In an exemplary implementation, the assistance information indication includes at least one timing advance parameter. As mentioned above, the parameter may be for instance coefficients of the first and second derivation term or polynomial term (depending on the approximation applied) that enable reconstructing the approximation of the common TA variations. In other words, the timing advance parameter is derived at network node by approximating the common TA. The common TA is obtained by the UE by reconstructing the approximation based on the parameter(s) indicated in the NTN-SIB.

The validity interval may be determined by the network node and indicated to the UEs together with the NTN-SIB. However, for some communication systems it is conceivable to provide a predefined fixed validity interval, e.g. by scheduling information in SIB1 or in a standard, without a possibility to configure it by signaling. The present disclosure is not limited to any particular way of obtaining the validity interval at a network node and/or at a user device.

In general, the timing advance between the network and the UE may be defined by compensation components for a feeder link delay, a service link delay and possibly a network controlled delay or the like. The above mentioned approximation is applied related to the feeder link part (i.e. between network and satellite). The present disclosure is not limited to any specific approach for determining and/or signaling the service link delay or the network controlled delay.

The reference time instance (epoch time) for obtaining the correct ephemeris and/or common TA may be determined relative to some system timing parameter in the same way by the network node and the user device, so that no additional (explicit) signaling may be necessary. However, in some implementations, it may be advantageous to explicitly signal the reference time instance from the network node to the user device. The validity interval may be determined (specified) relative to the reference time instance. The reference time instance in some embodiments may start the validity interval. However, the present disclosure is not limited to such relation between the reference time instance and the validity interval. In general, any other pre-configured relative position of the reference time instance and the validity interval may be supported.

It is noted that the functionality of the above network node may be embedded on an integrated circuitry corresponding in function to the processing circuitry 180 described above. Such processing circuitry controls the transmitter to perform the transmission and/or reception. Since the common TA is common for one or more devices served by the same NTN entity (e.g. satellite), it may be transmitted by way of broadcast such as the system information broadcast by the network node or the NTN entity. In the example of Fig. 6, for instance the gNB may transmit the NTN-SIB (over the NTN entity) possibly alongside with further information within a system information block (SIB) defined in the RRC protocol.

At both or any of, the network node and the user device, the processing circuitry 130 and/or 180 may be configured to determine the reference time instance based on a timing of the transmission (e.g. uplink and/or downlink transmission timing) of the system information. The timing may be known from the previously received configuration including the SIB transmission window.

For example, in general, the reference time (epoch time) may be determined in various different ways, e.g. based on at least one of the following reference points:

- a starting point of a system information window in which the system information (e.g. NTN-SIB) is transmitted. The UE (as receiving entity) can derive the starting point from the NTN-SIB reception timing, i.e. from the timing with which the UE received the SIB_NTN in the downlink.

- a starting point of a system frame number (SFN) of a frame in which the system information is transmitted. System frame number may be signaled in MIB or SIB1.

- a starting point of a frame in which the system information (NTN-SIB) is transmitted.

- a system information timing and a predefined offset relative to the reference time instance.

For example, the reference point can be directly one of the following:

- the starting point of the system information (SI) window in which the NTN-SIB is transmitted.

- the starting point of the SFN in which the NTN-SIB is transmitted.

- the starting point of the frame in which the NTN-SIB is transmitted.

- NTN-SIB timing minus delta_t ($\delta t$). Delta_t ($\delta t$) in this example is a fixed offset (relative to) starting from the reference time instance.

The term "system frame" means that the frame is defined for the data transmissions in the communication system (e.g. by standard). NTN-SIB is transmitted in a certain position (e.g. given by subframe and/or slot and/or symbol) within the system frame which is given by an offset $\delta t$ from the beginning of the system frame.

In the user device, the processing circuitry, in operation controls the transceiver to apply the determined timing advance when transmitting signals. The signals here are signals carrying for instance payload, control data and/or reference signals.

Alternatively or in addition to timing advance information, the assistance information may include satellite ephemeris, as also mentioned above. The present disclosure is not limited to these kinds of assistance data and can be useful for any information indicated in the system information that needs to be reconstructed with reference to epoch time or another time reference that can take values exceeding the validity duration of the system information.

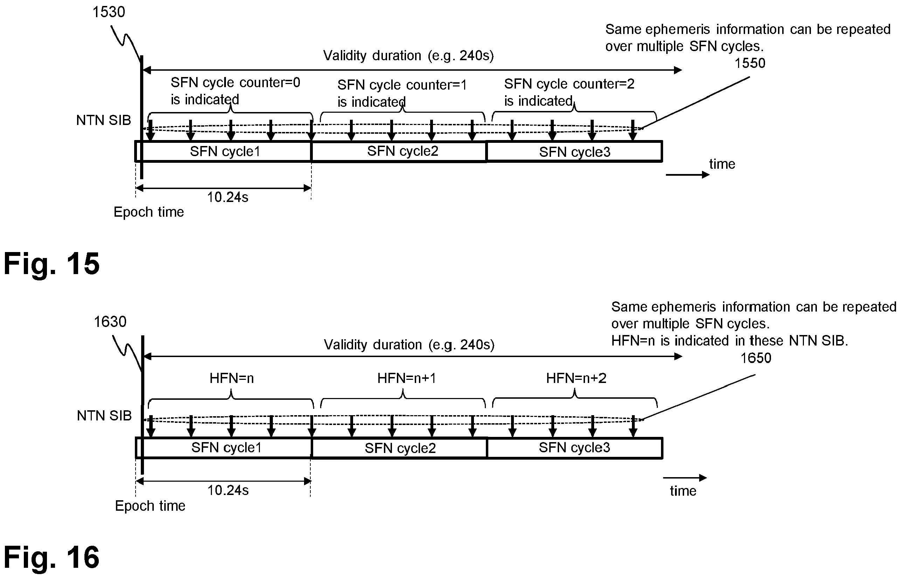

A first exemplary implementation is illustrated in **Fig. 15.** In this implementation, the network indicates SFN cycle counter in the NTN-SIB together with ephemeris and common TA parameters, and -- possibly but not necessarily -- epoch time.

In particular, for example, the processing circuitry, in operation, determines, from the system information an epoch time indication. Then the processing circuitry determines the epoch time further based on the epoch time indication referring to a system frame number, wherein the system frame number is unique within one system frame cycle. The system frame number is not necessarily unique outside the one system frame cycle.

The NTN-SIB contents may thus include at least the ephemeris (e.g. orbital parameters, 144 bits), the common TA parameters (e.g. 60 bits), the epoch time (e.g. expressed by SFN and subframe number, 14bit) and the SFN cycle counter (e.g. 5 bits).

In this example, the epoch time indication includes the starting time of a downlink sub-frame, indicated by a SFN and by a sub-frame number signaled together with the assistance information (with the NTN-SIB carrying the assistance information).

In the NTN-SIB transmitted 1530 in the same SFN cycle as the SFN indicated by the epoch time SFN cycle counter = 0 is indicated. In the NTN-SIB transmitted in the n-th SFN cycle(s) later compared to the SFN indicated by the epoch time (cycles ), SFN cycle counter=n (or n-1 if the counting starts with 0) is indicated. The term "is indicated" here refers to transmission of the SFN cycle count within the NTN-SIB. All NTN-SIBs that are transmitted (repeated) within the same SFN cycle have the same SFN cycle count.

One of the advantageous effects of this exemplary implementations is that the ephemeris and the common TA parameters do not need to be updated every SFN cycle. The same contents (of the NTN-SIB) can be repeated during the entire validity duration as can be seen in Fig. 15. In particular, the dashed ellipse 1550 denotes the repetitions of the updated 1530 NTN_SIB. The transmissions of the repetitions are denoted by the vertical arrows down.

In the above example, the epoch time indication was transmitted in the system information (NTN-SIB). However, the present exemplary implementation and the present disclosure in general do not require explicit epoch time indication. Rather, for example, at the user device, the processing circuitry, in operation, determines, the epoch time for the assistance information with reference to the end of a window in which the system information is transmitted.

In other words, in this example, the network indicates the SFN cycle count still in the NTN-SIB possibly together with ephemeris and common TA parameters but without explicit provision of epoch time. When not explicitly provided through the NTN-SIB, the epoch time to which the assistance information (e.g. serving satellite ephemeris and common TA parameters) is implicitly known as the end of the SI window during which the SI message is transmitted. As in the preceding example, in the NTN-SIB transmitted in the same SFN cycle as the indicated SFN (as epoch time), SFN cycle counter = 0 is indicated. In the NTN-SIB transmitted in the N-th SFN cycle later compared to the indicated SFN (as epoch time), SFN cycle counter = N is indicated.

As in the previous example, the NTN-SIB contents may thus include at least the ephemeris (e.g. orbital parameters, 144 bits), the common TA parameters (e.g. 60 bits), and the SFN cycle counter (e.g. 5 bits). However, the NTN-SIB does no longer need to include the epoch time (e.g. expressed by SFN and subframe number, 14bit).

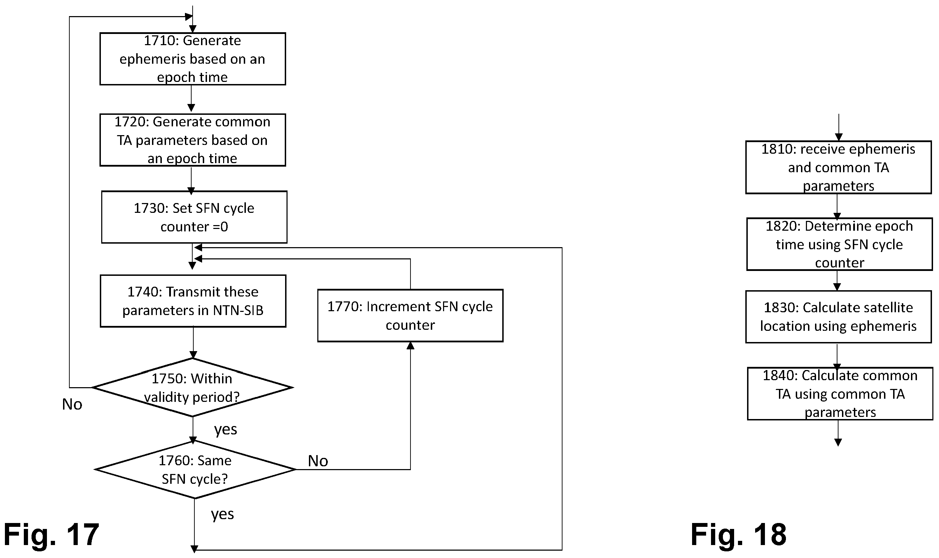

Fig. 17 shows an exemplary flow diagram illustrating a method to be performed at the network side in the first exemplary implementation. The network side here may be represented by the NTN device such as the satellite (or by the gateway or by a combination of the satellite and the gateway). The network knows the epoch time: in most cases the network may also know the absolute epoch time, but it knows in any case at least the relative epoch time in terms of the network timing such as SFN and subframe (or possibly HFN or other time domain unit). Step 1710 shows generating ephemeris based on the epoch time. As mentioned above, this step is not required - the ephemeris may be fully or partially stored at the user devices (e.g. in the SIM). However, indicating it to the user devices (UEs) can be more efficient in case there is a lot of ephemeris data or the ephemeris data can change more frequently. In step 1720, timing advance information is determined and timing advance indication (including one or more parameters) is generated with reference to the epoch time (relative to a predefined reference epoch time). For example, the common timing advance on feeder link is determined by the NTN device based on a signal received from a gNB. Then the timing advance variation in time is approximated by using one or more parameters and the one or more parameters is/are included into the NTN-SIB as the timing advance indication.

In step 1730 SFN cycle counter is set to 0 (in general to the lowest value out of the value range for the SFN cycle count). Then the determined (i.e. updated) ephemeris and/or timing advance indication (parameters) is transmitted within the NTN-SIB in step 1740.

In step 1750 it is determined whether or not the current NTN-SIB content is within the validity period. If not, then the NTN-SIB shall be updated, corresponding to repeating the steps 1710-1750 as shown in the flow diagram and described above. If the current NTN-SIB is still within the validity period, step 1760 follows, in which it is determined whether or not the current NTN-SIB is transmitted within the SFN cycle having the current SFN cycle count. If affirmative, the transmission of the NTN-SIB is performed in step 1740. If not, the SFN cycle count is incremented (in general updated, since it is conceivable that the counting is performed in decreasing order) in step 1760 and the method then proceeds to step 1740 in which the SIB-NTN is transmitted (but not updated, contrary to the method described with reference to Fig. 13).

Fig. 18 shows the corresponding method that is performed at the user device according to the first exemplary implementation. In particular, the user device receives in step 1810 an NTN-SIB including the ephemeris and the common TA information. In step 1820, the user device (e.g. its circuitry as described above) determines the epoch time by using the SFN cycle count and based on the epoch time indication either explicitly signaled or derived from the SIB window timing.

In step 1830, the user device calculates the satellite location (or in general the location of the NTN device) based on the ephemeris. In step 1840, the user device calculates the common TA based on the common TA parameters received in step 1810. In order to determine the ephemeris and the common TA, the epoch time determined in step 1820 may be used.

Fig. 16 illustrates a second exemplary implementation in which the indication of the count of system frame cycles corresponds to a hyper frame number. The hyper frame number indicates a count of hyper frames, a hyper frame including a predefined plural number of system frames.

The count of hyper frames is given by the communication system and does not necessarily start with or is related to the epoch time updating.

As can be seen in Fig.16, the network indicate HFN (Hyper Frame Number), SFN and a sub frame number as the epoch time. For example, LTE supports signaling of HFN and the HFN range is 0-1023 in LTE. Such HFN may be provided in the present exemplary implementation. In LTE, a 10 ms interval defines a system frame. The system frames may have numbers between 0 and 1023 and these numbers are called SFN (System Frame Number). When SFN number hits the max value (i.e 1023), it goes back to 0. UE and eNB maintain the synchronization on subframe number and SFN during the whole communication period. LTE has further introduced HFN (Hyper Frame Number or Hyper SFN) in order to support longer synchronization periods especially for the machine type communication and IoT. HFN is a timer at the next level to SFN. HFN ranges between 0 and 1023 and the value increases by 1 when SFN reaches 1023 and reset to 0. However, the present disclosure is not limited to the hyper frame of LTE. The range of HFN values may be different.

One of the effects of this embodiment is that the ephemeris and the common TA parameters do not need to be updated every SFN cycle. The same contents can be repeated during the validity duration, as also in the first exemplary implementation. In addition, HFN may be also useful for other applications such as the synchronization in LTE or the like.

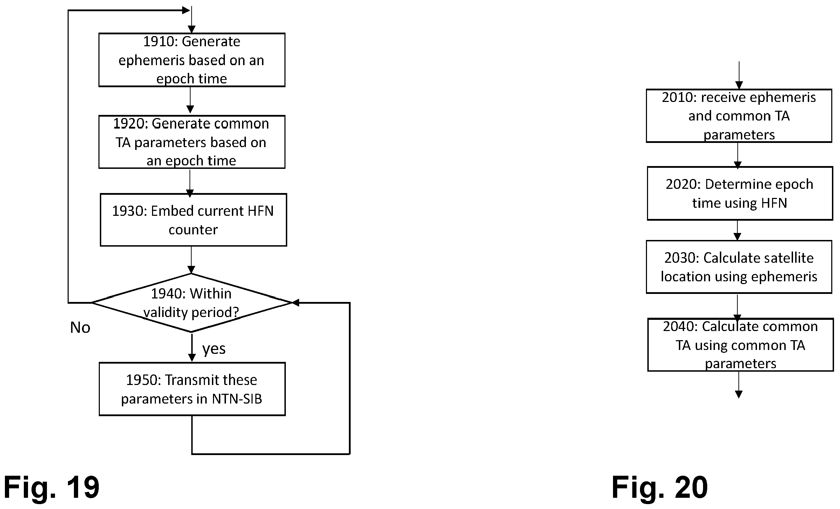

**Fig. 19** shows a flow diagram of an exemplary method to be performed at the network side in the second exemplary implementation. In particular, similarly as for the first exemplary implementation (cf. Figs. 17), step 1910 shows generating ephemeris based on the epoch time. As mentioned above, this step is not required - the ephemeris may be fully or partly stored at the user devices (e.g. in the SIM). In step 1920, timing advance information is determined and timing advance indication is generated with reference to the epoch time. In step 1930, the current HFN count is embedded (the NTN-SIB may refer to it). The network can transmit HFN, e.g. in every SIB1 and UEs can synchronize their SFN based on this. However, there are other possibilities of conveying the HFN.

In step 1940 it is determined whether or not the current NTN-SIB content is within the validity period. If not, then the NTN-SIB shall be updated, corresponding to repeating the steps 1910-1930 as shown in the flow diagram and described above. If the current NTN-SIB is still within the validity period, step 1750 follows, in which the SIB-NTN is transmitted (not updated, though) including the ephemeris and/or the common TA data and the embedded HFN.

**Fig. 20** shows a flow diagram of an exemplary method to be performed at the UE side in the second exemplary implementation. In particular, the user device receives in step 2010 an NTN-SIB including the ephemeris and the common TA information. In step 2020, the user device (e.g. its circuitry as described above) determines the epoch time by using the HFN and based on the epoch time indication either explicitly signaled or derived from the NTN-SIB window timing. In step 2030, the user device calculates the location of the NTN device based on the ephemeris. In step 2040, the user device calculates the common TA based on the common TA parameters received in step 2010. In order to determine the ephemeris and the common TA, the epoch time determined in step 2020 may be used.

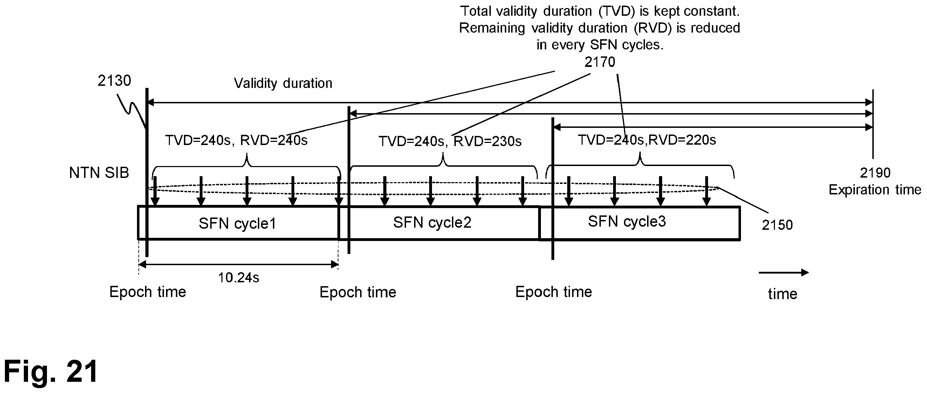

**Fig. 21** illustrates a third exemplary implementation in which the SFN cycles may be distinguished by a convention to set and modify the validity duration. In particular, the processing circuitry of the user device determines the count of system frame cycles based on a validity indication and based on a predefined validity duration. The validity indication indicates a time period in which the system information is valid for use by the user device. Moreover, the validity information is reset to the predefined validity duration in a system frame cycle in which the system information is updated and decreased in any other system frame cycle.

According to an advantageous implementation, the predefined validity duration is configured by network. In other words, the user device may receive, via the transceiver, the predefined validity duration. The network may configure the validity duration based on the estimation on how frequently the SIB data needs to be updated in order to ensure sufficient transmission/reception quality for a particular scenario (e.g. this may differ for GEO or LEO satellites or for airborne devices). However, the present disclosure is not limited to the predefined validity duration being signaled. Rather, the predefined validity duration may be set by a predefined rule or directly by a standard.

As can be seen in Fig. 21, there is no assumption of the contents of ephemeris and common TA parameters and the epoch time having any tight linkage. The epoch time 2130 of the NTN-SIB is used as a starting time of the validity duration. The indicated validity duration is reduced in every SFN cycles. For example, in the SFN cycle 1, the validity duration (VD) is set to the total VD (TVD), here having the exemplary value of 420s. In the SFN cycle 2, the remaining VD (RVD) is reduced by 10s roughly corresponding to the SFN cycle size. In the SFN cycle 3, the RVD is reduced by a further 10s to the value of 220s. As can be seen by reference sign 2170, the TVD remains the same (corresponding to the predefined validity duration). The RVD is decremented by a predefined step each SFN cycle. The predefined step advantageously corresponds to the SFN cycle duration.

It is noted that the correspondence does not have to be perfect. Furthermore, the remaining validity duration shown herein to be reduced in every SFN cycle only as an example. In general, the remaining validity duration can be signaled in every NTN-SIB transmission and decreased according to the NTN-SIB transmission timing. This may result in smaller validity durations, such as 5s and 10s or indeed every SFN cycle, as well as the larger validity durations up to 240s (i.e., decreasing not every SFN cycle but e.g. every predefined plurality of SFN cycles). When referring to predefined, what is meant is e.g. preconfigured by the betwork or given by a standard or by a rule specified in the standard or the like, so as to ensure synchronization between the network and the user devices.

As in the first and the second exemplary implementations, the ephemeris and common TA parameters do not need to be updated every SFN cycle. UE can know the correct expiration time of the SIB contents. This is illustrated by the dashed ellipse 2150 encircling NTN-SIB transmissions which may be repetitions of the NTN-SIB updated at the time instance 2130. The expiration time 2190 is the time at which the validity duration reaches or falls below 0s.

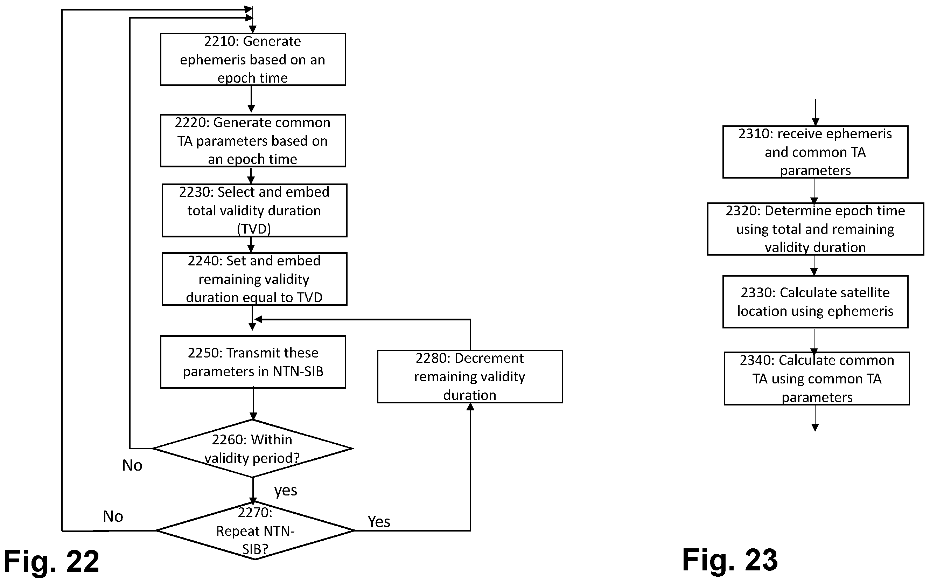

**Fig. 22** shows an exemplary method to be performed on the network side. In particular, similarly as for the first and second exemplary implementation (cf. Figs. 17 and 19), step 2210 shows generating ephemeris based on the epoch time. As mentioned above, this step is not required - the ephemeris may be fully or partly stored at the user devices (e.g. in the SIM). In step 2220, timing advance information is determined and timing advance indication is generated with reference to the epoch time.

In step 2230, the network side selects the total validity duration (TVD, i.e. the predefined vylidity duration mentioned above). In step 2240, the remaining validity duration (RVD) is set and embedded into the NTN-SIB. Here, following the update of the ephemeris and the common TA in steps 2210 and 2220, the RDV is set equal to the TVD.

In step 2250 these parameters (ephemeris, common TA indication and RVD determined in steps 2210, 2220, and 2240, respectively) are transmitted in the NTN-SIB. Moreover, in step 2260 it is determined whether or not the current NTN-SIB content is within the current validity period. If not, then the NTN-SIB shall be updated, corresponding to repeating the steps 2210-2250 as shown in the flow diagram and described above. If the current NTN-SIB is still within the validity period, step 2270 follows, in which it is determined whether or not the NTN-SIB is to be repeated. If affirmative, the RVD is decremented 2280 by the predefined step. Afterwards, the method loops back to step 2250 in which the NTN-SIB is transmitted (repeated without updating its content). In case of "no" in step 2270, the method loops back to step 2210, so that the content of the NTN-SIB is updated.

**Fig. 23** shows a flow diagram of an exemplary method to be performed at the UE side in the third exemplary implementation. In particular, the user device receives in step 2310 an NTN-SIB including the ephemeris and the common TA information. In step 2220, the user device (e.g. its circuitry as described above) determines the epoch time by using total (predefined) and remaining (current) validity duration. In step 2230, the user device calculates the location of the NTN device based on the ephemeris. In step 2240, the user device calculates the common TA based on the common TA parameters received in step 2210. In order to determine the ephemeris and the common TA, the epoch time determined in step 2220 may be used.

It is noted that the present disclosure is not limited to the exemplary first, second, and third implementations. Rather, further variations and modifications are possible. For example, in an exemplary modification of any of the above mentioned implementations, the transceiver of the user device, in operation, receives said system information via dedicated signaling relating to measurements or handover. Correspondingly the network transmits said system information via dedicated signaling relating to measurements or handover. The dedicated signaling may be RRC signaling, e.g. an RRC RECONFIGURATION message.

In addition or alternatively, the SFN counter and/or HFN may be added into the NTN-SIB optionally, e.g. only for a specific scenario such only for GEO satellites being the NTN devices. Correspondingly, the network may transmit and user device receive the SFN count or HFN or RVD/TVD depending on the type of the NTN-entity (network node).

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor.

In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

*Summary of embodiments*

Correspondingly to the above mentioned network node and user device and the related further examples and implementations, the present disclosure provides the corresponding methods to be executed by a network node and the user device or by their processing circuitries.

Further exemplary embodiments and implementations of the methods are provided by the steps performed in operation by the above described processing circuitry of the network node and/or the user device.

A user device is provided comprising: a transceiver which, in operation, receives system information regarding a non-terrestrial network from a network node; and processing circuitry which, in operation (i) determines, from the system information, an indication of a count of system frame cycles and assistance information indication, (ii) determines epoch time for deriving assistance information based on the indication of the count of system frame cycles, and (iii) derives the assistance information based on the epoch time and the assistance information indication.

For example, the processing circuitry, in operation, determines, from the system information an epoch time indication; and determines the epoch time further based on the epoch time indication referring to a system frame number, wherein the system frame number is unique within one system frame cycle.

As an alternative example, the processing circuitry, in operation, determines, the epoch time for the assistance information with reference to the end of a window in which the system information is transmitted.

For instance, the maximum count of system frame cycles is equal to or greater than validity period of the system information.

As an exemplary implementation, the count of system frame cycles starts when is the system information is updated, and increases with any system frame cycle following the system frame cycle in which the system information was updated.

For example, the indication of the count of system frame cycles corresponds to a hyper frame number; and the hyper frame number indicates a count of hyperframes, a hyperframe including a predefined plural number of system frames.

For example, the count of system frame cycles is determined based on a validity indication and based on a predefined validity duration; the validity indication indicates a time period in which the system information is valid for useby the user device; and the validity information is reset to the predefined validity duration in a system frame cycle in which the system information is updated and decreased in any other system frame cycle.

In some implementations, the predefined validity duration is set by a predefined rule, a standard, or received by the transceiver (e.g. within SIB1 or other information).

In any of the above mentioned examples, the count of system frame cycles may increase within a predefined value range cyclically.

The system information includes at least one of: Ephemeris; Timing advance parameters; Validity duration for uplink synchronization information; Cell reference location; Scheduling offset between uplink and downlink; and Polarization indication for uplink and/or downlink.

For example, the assistance information indication includes at least one timing advance parameter, and the processing circuitry, in operation controls the transceiver to apply the determined timing advance when transmitting signals. Alternatively, or in addition, the assistance information includes satellite ephemeris.

In some implementations, the transceiver, in operation, receives said system information via dedicated signaling relating to measurements or handover.

A network node is provided comprising: processing circuitry which, in operation generates system information regarding a non-terrestrial network, wherein the system information includes an indication of a count of system frame cycles and assistance information indication; and the assistance information that is indicated by the assistance information indication is derivable based on epoch time and the assistance information indication and the epoch time is determined based on the indication of the count of system frame cycles; and a transceiver which, in operation, transmits said system information.

A method is provided comprising: receiving system information regarding a non-terrestrial network from a network node; determining, from the system information, an indication of a count of system frame cycles and assistance information indication; determining epoch time for deriving assistance information based on the indication of the count of system frame cycles; and deriving the assistance information based on the epoch time and the assistance information indication. This method may be executed by a user device.

A method is provided for a network node, the method comprising: generating system information regarding a non-terrestrial network, wherein the system information includes an indication of a count of system frame cycles and assistance information indication; and the assistance information that is indicated by the assistance information indication is derivable based on epoch time and the assistance information indication and the epoch time is determined based on the indication of the count of system frame cycles; and transmitting said system information.

It is noted that the method may be also executed on the processing circuitry of the user device or by an integrated circuit. In such case, instead of the reception and transition steps the method includes providing to a transceiver (or merely to an output) data for (wireless) transmission and obtaining from a transceiver (or merely at an input) data (e.g. the coefficients).

In the present disclosure, an integrated circuit (IC) is provided which in operation, performs determining, from a system information, an indication of a count of system frame cycles and assistance information indication; determining epoch time for deriving assistance information based on the indication of the count of system frame cycles; and deriving the assistance information based on the epoch time and the assistance information indication. The IC further comprises an input to which the system information is provided from a receiver. Such input may be in practical implementations be connectable or connected with a transceiver which would then perform the reception.

In the present disclosure, an integrated circuit (IC) is provided. The IC in operation performs generating system information regarding a non-terrestrial network, wherein the system information includes an indication of a count of system frame cycles and assistance information indication; and the assistance information that is indicated by the assistance information indication is derivable based on epoch time and the assistance information indication and the epoch time is determined based on the indication of the count of system frame cycles. The IC may further have an output to which the generated system information is provided for transmission e.g. by a transceiver.

The present disclosure further provides program code which when executed on one or more processors causes the one or more processors to execute any of the methods mentioned above. The program code may be stored on a non-transitory medium.

The present disclosure provides a communication system which includes the network node as described above and one or more user devices as described above. It may further comprise one or more NTN entities.

**Claims**

1. A user device comprising:

a transceiver which, in operation, receives system information regarding a non-terrestrial network from a network node; and

processing circuitry which, in operation

- determines, from the system information, an indication of a count of system frame cycles and assistance information indication,
- determines epoch time for deriving assistance information based on the indication of the count of system frame cycles, and
- derives the assistance information based on the epoch time and the assistance information indication.

2. The user device according to claim 1, wherein

the processing circuitry, in operation, determines, from the system information an epoch time indication; and determines the epoch time further based on the epoch time indication referring to a system frame number, wherein the system frame number is unique within one system frame cycle.

3. The user device according to claim 1, wherein
the processing circuitry, in operation, determines, the epoch time for the assistance information with reference to the end of a window in which the system information is transmitted.

4. The user device according to any of claims 1 to 3, wherein the maximum count of system frame cycles is equal to or greater than validity period of the system information.

5. The user device according to any of claims 1 to 4, wherein the count of system frame cycles:

starts when is the system information is updated, and
increases with any system frame cycle following the system frame cycle in which the system information was updated.

6. The user device according to claim 1 or 4, wherein

the indication of the count of system frame cycles corresponds to a hyper frame number;
the hyper frame number indicates a count of hyperframes, a hyperframe including a predefined plural number of system frames.

7. The user device according to claim 1 or 2, wherein

the count of system frame cycles is determined based on a validity indication and based on a predefined validity duration;
the validity indication indicates a time period in which the system information is valid for use by the user device;
the validity information is reset to the predefined validity duration in a system frame cycle in which the system information is updated and decreased in any other system frame cycle, and
the predefined validity duration is set by a predefined rule, a standard, or received by the transceiver.

8. The user device according to any of claims 1 to 7, wherein the count of system frame cycles increases within a predefined value range cyclically.

9. The user device according to any of claims 1 to 8, wherein the system information includes at least one of:

- Ephemeris;
- Timing advance parameters;
- Validity duration for uplink synchronization information;
- Cell reference location;
- Scheduling offset between uplink and downlink; and
- Polarization indication for uplink and/or downlink.

10. The user device according to any of claims 1 to 9, wherein the assistance information indication includes at least one timing advance parameter, and
the processing circuitry, in operation controls the transceiver to apply the determined timing advance when transmitting signals.

11. The user device according to any of claims 1 to 10, wherein the assistance information includes satellite ephemeris.

12. The user device according to any of claims 1 to 11, wherein the transceiver, in operation, receives said system information via dedicated signaling relating to measurements or handover.

13. A network node comprising:

processing circuitry which, in operation
generates system information regarding a non-terrestrial network, wherein

- the system information includes an indication of a count of system frame cycles and assistance information indication; and
- the assistance information that is indicated by the assistance information indication is derivable based on epoch time and the assistance information indication and the epoch time is determined based on the indication of the count of system frame cycles; and

a transceiver which, in operation, transmits said system information.

14. A method for a user device, the method comprising:

receiving system information regarding a non-terrestrial network from a network node;
determining, from the system information, an indication of a count of system frame cycles and assistance information indication;
determining epoch time for deriving assistance information based on the indication of the count of system frame cycles; and
deriving the assistance information based on the epoch time and the assistance information indication.

15. A method for a network node, the method comprising:

generating system information regarding a non-terrestrial network, wherein

- the system information includes an indication of a count of system frame cycles and assistance information indication; and
- the assistance information that is indicated by the assistance information indication is derivable based on epoch time and the assistance information indication and the epoch time is determined based on the indication of the count of system frame cycles; and

transmitting said system information.

**Fig. 1**

**Fig. 2**

EP 4 228 328 A1

**Fig. 3**

**Enhanced Mobile Broadband**

Gigabytes in a second    3D vide, UHD screens

Smart Home/Building

Augmented reality

Work and play in the cloud

Mission critical application e.g. e-health

Smart City

Industry automation

Self Driving Car

**Massive Machine Type Communication**

**Ultra-reliable and Low Latency Communication**

**Fig. 4**

EP 4 228 328 A1

Fig. 5

**Fig. 6**

NG Radio Access Network

Data Network

N6

5G CN

NG

Remote Radio Unit

NR-Uu

NTN gNB gateway

NR-Uu

UE

**Fig. 7**

NG Radio Access Network

Data Network

N6

5G CN

NG

NG over SRI

NTN gateway

gNB

NR-Uu

UE

Fig. 8

**Fig. 9**

**Fig. 10**

One SFN cycle 1110

SFN wrap-around

| SFN0 | SFN1 | • • • | SFN 1022 | SFN 1023 | | SFN0 | SFN1 |

10ms

10,24s

**Fig. 11**

epoch time $t_0$

epoch time based on SFN cycles

time

0s    10.24s    20.48s    30.72s    40.96s

**Fig. 12**

**Fig. 13**

1330

1320

Validity duration (up to 240s)

NTN SIB

| SFN cycle1 | SFN cycle2 | SFN cycle3 |

1310: Same SIB contents are repeated.

10.24s

Epoch time

time

Epoch time

Epoch time

Epoch time

**Fig. 14**

110

120

150  channel

170

160

transceiver (transmitter, receiver)

input/output node

processing circuitry

communication device, UE  130

transceiver (transmitter, receiver)

input/output node

processing circuitry

scheduling device, BS, eNB/gNB, NTN entity  180

100

**Fig. 15**

Same ephemeris information can be repeated over multiple SFN cycles. 1550

Validity duration (e.g. 240s)

1530

NTN SIB

SFN cycle counter=0 is indicated — SFN cycle1

SFN cycle counter=1 is indicated — SFN cycle2

SFN cycle counter=2 is indicated — SFN cycle3

Epoch time — 10.24s

time

**Fig. 16**

Same ephemeris information can be repeated over multiple SFN cycles. HFN=n is indicated in these NTN SIB. 1650

Validity duration (e.g. 240s)

1630

NTN SIB

HFN=n — SFN cycle1

HFN=n+1 — SFN cycle2

HFN=n+2 — SFN cycle3

Epoch time — 10.24s

time

**1710:** Generate ephemeris based on an epoch time

**1720:** Generate common TA parameters based on an epoch time

**1730:** Set SFN cycle counter =0

**1740:** Transmit these parameters in NTN-SIB

**1770:** Increment SFN cycle counter

**1750:** Within validity period?

No

yes

**1760:** Same SFN cycle?

No

yes

## Fig. 17

**1810:** receive ephemeris and common TA parameters

**1820:** Determine epoch time using SFN cycle counter

**1830:** Calculate satellite location using ephemeris

**1840:** Calculate common TA using common TA parameters

## Fig. 18

```
        ┌─────────────────────┐
  ┌────►│  1910: Generate     │
  │     │  ephemeris based on │
  │     │  an epoch time      │
  │     └──────────┬──────────┘
  │                │
  │     ┌──────────▼──────────┐
  │     │  1920: Generate     │
  │     │  common TA          │
  │     │  parameters based   │
  │     │  on an epoch time   │
  │     └──────────┬──────────┘
  │                │
  │     ┌──────────▼──────────┐
  │     │  1930: Embed        │
  │     │  current HFN        │
  │     │  counter            │
  │     └──────────┬──────────┘
  │                │
  │          ╱─────▼─────╲
  │   No    ╱ 1940: Within ╲
  └────────◄ validity      ◄───────┐
           ╲ period?      ╱        │
            ╲─────┬─────╱          │
                  │ yes            │
        ┌─────────▼─────────┐      │
        │  1950: Transmit   │      │
        │  these parameters │──────┘
        │  in NTN-SIB       │
        └───────────────────┘
```

# Fig. 19

```
        ┌─────────────────────┐
        │  2010: receive      │
        │  ephemeris and      │
        │  common TA          │
        │  parameters         │
        └──────────┬──────────┘
                   │
        ┌──────────▼──────────┐
        │  2020: Determine    │
        │  epoch time using   │
        │  HFN                │
        └──────────┬──────────┘
                   │
        ┌──────────▼──────────┐
        │  2030: Calculate    │
        │  satellite location │
        │  using ephemeris    │
        └──────────┬──────────┘
                   │
        ┌──────────▼──────────┐
        │  2040: Calculate    │
        │  common TA using    │
        │  common TA          │
        │  parameters         │
        └──────────┬──────────┘
                   │
                   ▼
```

# Fig. 20

Fig. 21

**Fig. 22**

2210: Generate ephemeris based on an epoch time

2220: Generate common TA parameters based on an epoch time

2230: Select and embed total validity duration (TVD)

2240: Set and embed remaining validity duration equal to TVD

2250: Transmit these parameters in NTN-SIB

2280: Decrement remaining validity duration

2260: Within validity period?

No

yes

2270: Repeat NTN-SIB?

No          Yes

**Fig. 23**

2310: receive ephemeris and common TA parameters

2320: Determine epoch time using total and remaining validity duration

2330: Calculate satellite location using ephemeris

2340: Calculate common TA using common TA parameters

# EUROPEAN SEARCH REPORT

| | Application Number |
|---|---|
| | EP 22 15 6589 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MODERATOR (THALES): "FL Summary #4 on enhancements on UL time and frequency synchronization for NR NTN", 3GPP DRAFT; R1-2111127, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 – 20211119 20 November 2021 (2021-11-20), XP052097714, Retrieved from the Internet: URL:https://ftp.3gpp.org/tsg_ran/WG1_RL1/T SGR1_107-e/Docs/R1-2111127.zip R1-2111127.docx [retrieved on 2021-11-20] * paragraph [03.2] * * paragraph [0007] * * paragraph [0008] * * paragraph [13.2] * ----- | 1–15 | INV. H04W48/12 |
| Y | Anonymous: "LTE Quick Reference – Subframe Number, SFN and HFN", , 24 June 2021 (2021-06-24), pages 1-2, XP055946624, Retrieved from the Internet: URL:https://web.archive.org/web/2021062408 0317/https://www.sharetechnote.com/html/Ha ndbook_LTE_SFN.html [retrieved on 2022-07-27] * page 1 – page 2 * ----- | 1–15 | TECHNICAL FIELDS SEARCHED (IPC) H04W H04B |

−/−−

The present search report has been drawn up for all claims

| Place of search | Date of completion of the search | Examiner |
|---|---|---|
| Munich | 29 July 2022 | Cremer, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 22 15 6589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERICSSON: "On UL time and frequency synchronization enhancements for NTN", 3GPP DRAFT; R1-2111414, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. e-Meeting; 20211111 - 20211119 5 November 2021 (2021-11-05), XP052074863, Retrieved from the Internet: URL:https://ftp.3gpp.org/tsg_ran/WG1_RL1/TSGR1_107-e/Docs/R1-2111414.zip R1-2111414 On UL time and frequency synchronization enhancements for NTN.docx [retrieved on 2021-11-05] * paragraph [0004] * ----- | 1-15 | |
| A | US 10 547 374 B1 (LIU XIANGDONG [US]) 28 January 2020 (2020-01-28) * column 11, line 9 - column 12, line 40 * ----- -/-- | 1-15 | TECHNICAL FIELDS SEARCHED (IPC) |

The present search report has been drawn up for all claims

| Place of search | Date of completion of the search | Examiner |
|---|---|---|
| Munich | 29 July 2022 | Cremer, Jan |

EPO FORM 1503 03.82 (P04C01)

page 2 of 3

Europäisches
Patentamt

European
Patent Office

Office européen
des brevets

**EUROPEAN SEARCH REPORT**

Application Number

EP 22 15 6589

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | PANASONIC: "Enhancements on UL time and frequency synchronization", 3GPP DRAFT; R1-2201387, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. E-meeting; 20220221 - 20220303 14 February 2022 (2022-02-14), XP052109446, Retrieved from the Internet: URL:https://ftp.3gpp.org/tsg_ran/WG1_RL1/TSGR1_108-e/Docs/R1-2201387.zip R1-2201387 NTN UL synchronization for RAN1_108-e.docx [retrieved on 2022-02-14] * paragraph [0003] * ----- | | |

TECHNICAL FIELDS
SEARCHED      (IPC)

The present search report has been drawn up for all claims

| Place of search | Date of completion of the search | Examiner |
|---|---|---|
| Munich | 29 July 2022 | Cremer, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 15 6589

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2022

| Patent document cited in search report | | Publication date | Patent family member(s) | | Publication date |
|---|---|---|---|---|---|
| US 10547374 | B1 | 28-01-2020 | US | 10153831 B1 | 11-12-2018 |
| | | | US | 10547374 B1 | 28-01-2020 |
| | | | US | 10547375 B1 | 28-01-2020 |
| | | | US | 10848238 B1 | 24-11-2020 |

EPO FORM P0459

For more details about this annex : see Official Journal of the European Patent Office, No. 12/82